# EUROPÄISCHE PATENTSCHRIFT

(11) **EP 2 865 835 B1**
(45) Veröffentlichungstag und Bekanntmachung des Hinweises auf die Patenterteilung: **07.02.2018**
(21) Anmeldenummer: 14186925.5
(22) Anmeldetag: 29.09.2014
(51) Int. Cl.: E05G 1/04, E05B 47/00, E05B 67/06, E05B 19/00, B62H 5/10, E05B 71/00, E05B 67/22, E05B 67/02, B62H 5/08, B62K 19/46, E05B 1/00, E05B 83/34

(54) **Digitales Verschlussmittel**
Digital closure
Moyen de fermeture digital

(30) Priorität: 24.10.2013 DE 102013111717
(43) Veröffentlichungstag der Anmeldung: 29.04.2015
(73) Patentinhaber: SMIVES GmbH, 14059 Berlin (DE)
(72) Erfinder: Naumann, Michael, 01159 Deresden (DE)
(74) Vertreter: Lippert Stachow Patentanwälte Rechtsanwälte

(56) Entgegenhaltungen:
- EP-A2- 0 454 903
- US-A1- 2003 179 075

## Beschreibung

Die Erfindung betrifft ein digitales Verschlussmittel, bestehend aus einem Verschlussmittel-Gehäuse, in welchem ein Antriebsmittel mit einem Arretierungsmittel verbunden angeordnet ist.

Die Erfindung betrifft ein universelles vielseitig einsetzbares digitales Verschlussmittel.

Dieses Verschlussmittel kann beispielsweise mit einem rohrförmigen Verschlussmittel-Gehäuse ausgeführt werden, wobei auch eine Ausführung in einer Quaderform und andere Formen denkbar sind.

Das rohrförmige Verschlussmittel-Gehäuse beinhaltet einen in diesem Gehäuse bewegbaren Verschlussmittel-Einsatz, welcher zumindest mit einem Arretierungsmittel verbunden ist. Die Aufgabe dieses Arretierungsmittels besteht darin, bewegliche Teile, wie beispielsweise einen Bügel eines Fahrrad-Bügelschlosses, eine Welle, ein Zahnrad oder ein Tretlager eines Fahrrades, festzustellen und somit deren Beweglichkeit einzuschränken oder ganz zu verhindern.

Der bewegbare Verschlussmittel-Einsatz kann sich im rohrförmigen Verschlussmittel-Gehäuse um die Rohrachse drehbar bewegen. Alternativ kann sich der Einsatz auch entlang der Rohrachse bewegen. In einer besonderen Ausführung ist die Bewegungsrichtung des Einsatzes eine Kombination aus beiden Bewegungsrichtungen (Drehung, Verschiebung), beispielsweise in Form einer spiralförmigen Bewegung.

Unabhängig von der eigentlichen Bewegungsform des Verschlussmittel-Einsatzes wird das mit diesem verbundene Arretierungsmittel durch die Bewegung entweder in eine Position gebracht in der das zugehörige bewegliche Teil arretiert ist oder in der das zugehörige bewegliche Teil frei bewegbar ist.

Die Erfindung sieht außerdem vor, dass das digitale Verschlussmittel fern steuerbar verriegelt oder entriegelt werden kann.

Besonders vorteilhaft ist eine Steuerung des digitalen Verschlussmittels mittels eines mobilen Gerätes, wie einem Tablett-PC oder einem Smartphone.

Zu diesem Zweck kann zwischen dem Verschlussmittel und dem steuernden Gerät eine IRDA-, WLAN-, Wi-Fi- oder Bluetooth-Datenverbindung hergestellt werden.

Aus dem Stand der Technik ist hierzu ein Fahrradschloss bekannt, welches sich unter Nutzung einer Smartphone-App öffnen und verschließen lässt.

Beim diesem als "Bitlock" bezeichneten System handelt es sich um ein etwa ein Kilogramm schweres Bügelschloss aus 12 Millimeter starkem Stahl mit Vinylüberzug. Es erkennt den Fahrradbesitzer ab etwa einem Meter Entfernung, wenn der auf seinem Telefon die dazugehörige App installiert und Bluetooth eingeschaltet hat. Der Datenaustausch zwischen Telefon und Schloss erfolgt verschlüsselt.

Der Nutzer kann auch anderen Smartphone-Besitzern das Recht einräumen, sein Fahrradschloss aufzuschließen. Damit wird natürlich - ähnlich wie beim inzwischen vielerorts etablierten Carsharing - auch die Möglichkeit geschaffen, komfortabel und unkompliziert zu mehreren einen gemeinsamen Pool an Fahrrädern zu nutzen.

Die zugehörige App soll weitere mehr oder weniger nützliche Fähigkeiten bieten. So merkt sie sich etwa die GPS-Daten des jeweiligen Standortes, wenn das Fahrradschloss geöffnet beziehungsweise geschlossen wird. Das gilt auch für andere Fahrräder, für die man nutzungsberechtigt ist. Darüber hinaus lässt sich die App optional als Aktivitäten-Monitor verwenden.

Ein wesentlicher Nachteil dieses Standes der Technik besteht darin, dass das die Anwendung auf ein Fahrradschloss begrenzt und das Antriebsmittel für das Arretierungsmittel nur durch das Schlossgehäuse geschützt ist.

Ein weiteres Fahrradschloss wird in der EP 0 454 903 A2 offenbart. Zudem ist aus der US 2003/179075 A1 ein Zugangskontrollsystem bekannt, bei dem mittels Eingabe eines Codes ein Schlüsselfach geöffnet werden kann.

Aufgabe der Erfindung ist es, ein universell einsetzbares digitales Verschlussmittel anzugeben, welches an verschiedene Schließ- oder Verschlusssysteme anpassbar ist und drahtlos elektronisch angesteuert wird.

Gemäß der Erfindung wird die Aufgabe bei einem digitalen Verschlussmittel der eingangs genannten Art dadurch gelöst, dass das Antriebsmittel in einem Verschlussmittel-Einsatz angeordnet ist, dass der Verschlussmittel-Einsatz in dem und relativ zu dem Verschlussmittel-Gehäuse bewegbar angeordnet ist und dass das Arretierungsmittel mit dem Verschlussmittel-Einsatz verbunden ist.

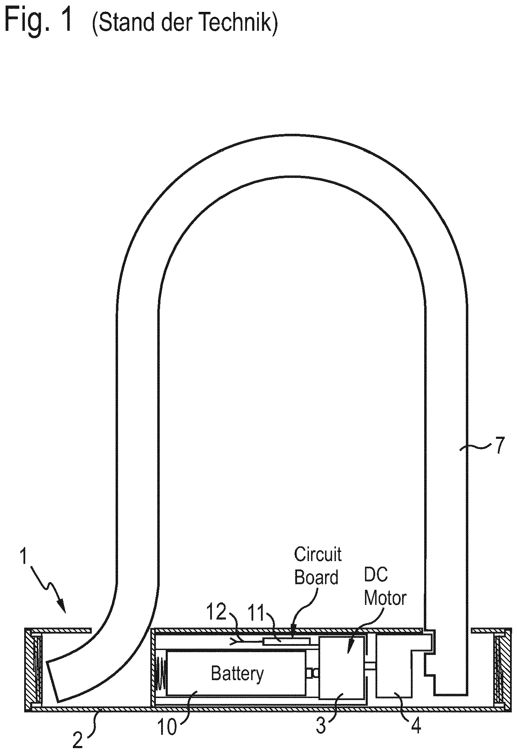

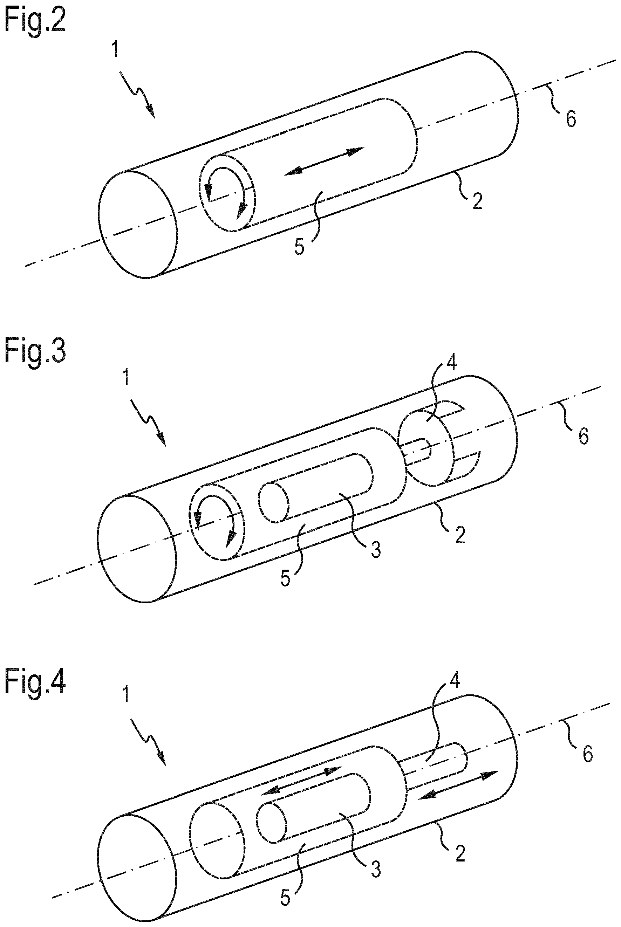

Vorgesehen ist, das Antriebsmittel in einem Verschlussmittel-Einsatz anzuordnen, welcher durch das Antriebsmittel im Verschlussmittel-Gehäuse gedreht oder verschoben wird. Mit diesem Verschlussmittel-Einsatz wird das Arretierungsmittel verbunden, sodass dieses ebenfalls verdreht oder verschoben werden kann. Derart kann ein drehbares Arretierungsmittel eine aus dem Stand der Technik bekannte Arretierung eines Bügels eines Bügelschlosses, wie in der Figur 1 und 3 dargestellt ist, ermöglichen. Durch das Einbringen des Antriebsmittels in den Verschlussmittel-Einsatz wird sowohl das Antriebsmittel selbst als auch weitere unmittelbar mit dem Antriebsmittel zusammenarbeitende Teile, wie beispielsweise ein Getriebe oder ein Schneckenantrieb und andere, besser vor äußeren mechanischen und anderen Einwirkungen geschützt werden.

In einer Ausgestaltung der Erfindung ist vorgesehen, dass der Verschlussmittel-Einsatz im Verschlussmittel-Gehäuse drehbar um eine Längsachse und/oder verschiebbar entlang einer Längsachse angeordnet ist.

Neben einer Drehbewegung um eine gedachte Längsachse des Verschlussmittel-Gehäuses ist auch eine Verschiebung des Verschlussmittel-Einsatzes entlang der Längsachse möglich. In einer besonderen Ausführung wird der Verschlussmittel-Einsatz in einer kombinierten Bewegung, welche sowohl eine Drehbewegung als auch eine Verschiebung umfasst, bewegt, wobei beispielsweise eine spiralförmige Bewegung durch den Verschlussmittel-Einsatz erfolgt.

Selbstverständlich sind auch andere Kombinationen der Bewegungen denkbar, wie beispielsweise eine Drehbewegung mit einer nachfolgenden Verschiebebewegung und umgekehrt.

In einer weiteren Ausgestaltung der Erfindung ist vorgesehen, dass der Verschlussmittel-Einsatz einen Bereich zum Einlegen eines Gegenstands aufweist und dass das Verschlussmittel-Gehäuse eine Öffnung, korrespondierend mit dem Bereich zum Einlegen eines Gegenstands, aufweist.

Der Verschlussmittel-Einsatz weist beispielsweise einen ausgefrästen Bereich auf, welcher derart dimensioniert ist, dass ein bevorzugter Gegenstand, wie ein Schlüssel, in diesen Bereich eingebracht oder eingelegt werden kann. Damit dieses Einlegen eines Schlüssels in einer bestimmten Position des Verschlussmittel-Einsatzes relativ zum Verschlussmittel-Gehäuse möglich ist, wird in diesem Gehäuse eine Öffnung vorgesehen, welche in ihrer Größe mit dem Bereich übereinstimmt. Sind der Bereich und die Öffnung in besagter Position (weiter unten als erste Position bezeichnet) in Übereinstimmung gebracht worden, kann der Schlüssel in den Bereich eingelegt oder aus diesem entnommen werden.

In einer Ausführungsform der Erfindung ist vorgesehen, dass der Verschlussmittel-Einsatz in eine erste Position bewegbar ist, in welcher der Bereich mit der Öffnung des Verschlussmittel-Gehäuses derart zueinander ausgerichtet ist, dass ein Einlegen oder Entnehmen eines Gegenstands in oder aus dem Bereich gewährleistet ist und dass der Verschlussmittel-Einsatz in eine zweite Position bewegbar ist, in welcher ein Einlegen oder Entnehmen eines Gegenstands in oder aus dem Bereich verhindert wird.

Nach dem Einlegen des Schlüssels in der ersten Position wird der Bereich des Verschlussmittel-Einsatzes beispielsweise durch eine Drehbewegung um einen Winkel von 90 oder 180 Grad verdreht. Durch dieses Verdrehen, relativ zur Öffnung des Verschlussmittel-Gehäuses, wird diese Öffnung verschlossen und eine Entnahme des Schlüssels aus dem Bereich verhindert. Gleichzeitig mit dieser Drehbewegung kann das Arretierungsmittel einen Stahlbügel eines Bügelschlosses arretieren und derart ein Fahrrad angeschlossen werden.

Ein Verschließen des Bereiches kann ebenfalls durch eine Verschiebebewegung des Verschlussmittel-Einsatzes im Verschlussmittel-Gehäuse erreicht werden. In diesem Fall kann ein mit dem Verschlussmittel-Einsatz verbundenes Arretierungsmittel in Form eines Riegels aus einem stirnseitigen Ende des Verschlussmittel-Gehäuses ausgefahren werden und, wie bei einem Riegel üblich, durch ein Einfahren des Arretierungsmittels in ein dafür vorgesehenes Gegenstück ein Verschließen gewährleisten. Derart könnte das digitale Verschlussmittel als ein Schloss in Form eines Türriegels eingesetzt werden.

In einer besonderen Ausführungsform der Erfindung ist vorgesehen, dass der Verschlussmittel-Einsatz mindestens in der zweiten Position gegen ein ungewolltes Verschieben und/oder Verdrehen des Verschlussmittel-Einsatzes mittels eines Bolzens oder einer Kugel feststellbar ist.

Zur Vermeidung des Öffnens des Verschlussmittels durch Unbefugte, beispielsweise unter Einsatz mechanischer Mittel, ist vorgesehen, die Relativbewegung zwischen Verschlussmittel-Gehäuse und Verschlussmittel-Einsatz durch den Einsatz zusätzlicher Mittel zu erschweren. Hierfür eignet sich beispielsweise ein Bolzen oder eine Kugel, welche zumindest in der zweiten Position (Verschlussposition) einrasten oder ausgefahren werden und derart eine Bewegung verhindern.

Es ist selbstverständlich, dass eine derart verhinderte Bewegung vor einer erwünschten Bewegung zum Öffnen des Verschlussmittels zuerst aufgehoben werden muss, bevor eine gewollte Dreh- und/oder Verschiebebewegung erfolgen kann.

In einer bevorzugten Realisierung der Erfindung ist vorgesehen, dass im Verschlussmittel-Gehäuse eine Antenne, eine Spannungsversorgungseinheit und eine elektronische Steueranordnung angeordnet sind.

Zur Ansteuerung der Antriebseinheit und somit zum Öffnen und Verschließen sind weitere Baugruppen innerhalb des Verschlussmittels angeordnet. Mittels einer Antenne, welche mit einer entsprechenden Sende- und Empfangsanordnung verbunden ist, können drahtlos Daten empfangen oder gesendet werden. Zur Datenübertragung eignen sich alle üblichen Übertragungsstandards wie beispielsweise WLAN-, Wi-Fi oder Bluetooth. Alternativ könnte die Datenübertragung mittels einer optischen Sende- und Empfangseinheit unter Nutzung des IRDA-Protokolls erfolgen.

Vorgesehen ist weiterhin, eine mit der Sende- und Empfangsanordnung einerseits und dem Antriebsmittel andererseits in Verbindung stehende Steuereinheit zu integrieren, mittels welcher beispielsweise eine Dekodierung verschlüsselt übertragener Daten, eine Prüfung einer Zugangsberechtigung, eine Bereitstellung entsprechender Steuersignale für das Antriebsmittel und andere aus dem Stand der Technik bekannte Funktionen bereitgestellt werden können.

Die Erfindung soll nachfolgend anhand eines Ausführungsbeispiels näher erläutert werden. In den zugehörigen Zeichnungen zeigt
- Fig. 1: ein Fahrradbügelschloss aus dem Stand der Technik,
- Fig. 2: ein erfindungsgemäßes digitales Verschlussmittel in einer Prinzipdarstellung,
- Fig. 3: eine weitere Prinzipdarstellung der Erfindung mit einem im Verschlussmittel-Einsatz befindlichen Antriebsmittel und einem drehbaren Arretierungsmittel,
- Fig. 4: eine weitere Prinzipdarstellung der Erfindung mit einem im Verschlussmittel-Einsatz befindlichen Antriebsmittel und einem verschiebbaren Arretierungsmittel (Riegel),
- Fig. 5 bis 11: einige Darstellungen des erfindungsgemäßen Verschlussmittels in einer Ausführungsform als Fahrradbügelschloss mit einem Bereich zum Einlegen eines Gegenstands, einer zugehörigen Öffnung im Verschlussmittel-Gehäuse, aus verschiedenen Darstellungspositionen und mit geschlossenem, teilweise geöffneten und vollständig geöffneten Bereich, in welchem ein Schlüssel eingelegt ist,
- Fig. 12: eine Einsatzmöglichkeit des digitalen Verschlussmittels eingebracht in ein Fahrradrahmenrohr zur Blockierung eines Tretlagers an einem Fahrrad,
- Fig. 13: eine Ausführung des digitalen Verschlussmittels als ein Fahrradbügelschloss in einer detaillierteren Darstellung der einzelnen Bauteile/Baugruppen,
- Fig. 14: eine Ausführung des digitalen Verschlussmittels als Türknauf oder Wandsave in verschiedenen Ansichten,
- Fig. 15: eine perspektivische Darstellung des digitalen Verschlussmittels in einer Ausführung als Türknauf oder Wandsave,
- Fig. 16: eine Teildarstellung des Antimanipulationsmechanismus des digitalen Verschlussmittels, dargestellt in einer Position mit geöffneter Sperre,
- Fig. 17: eine weitere Teildarstellung des Antimanipulationsmechanismus des digitalen Verschlussmittels, dargestellt in einer Übergangsposition und
- Fig. 18: eine dritte Teildarstellung des Antimanipulationsmechanismus des digitalen Verschlussmittels, dargestellt in einer Position mit geschlossener Sperre.

Die Figur 1 zeigt ein aus dem Stand der Technik bekanntes Fahrradbügelschloss, welches eine Batterie 10, eine Antenne 12, eine Steuerschaltung 11, eine Antriebseinheit 3 und einen mit dem Arretierungsmittel 4 arretierbaren Stahlbügel 7 umfasst.

Über die Antenne 12 empfängt die Steuerschaltung 11 SteuerDaten und steuert das Antriebsmittel 3, beispielsweise einen Schrittmotor, an. Die Antriebsachse des Antriebsmittels 3 ist mit dem Arretierungsmittel 4 verbunden, welches bei einer Ansteuerung des Motors gedreht wird. Durch eine entsprechende Gestaltung des Arretierungsmittels 4 kann der Stahlbügel 7 in einer bestimmten Lage des Arretierungsmittels 4 blockiert werden. In einer anderen Position des Arretierungsmittels 4, beispielsweise nach einer 180-Grad-Drehung, wird der Stahlbügel 7 freigegeben und das Schloss kann geöffnet werden.

Die Figur 2 zeigt eine Prinzipdarstellung des erfindungsgemäßen Verschlussmittels mit einem Verschlussmittel-Gehäuse 2, in welchem der Verschlussmittel-Einsatz 5 bewegbar angeordnet ist. Hierbei veranschaulichen die Doppelpfeile mögliche Bewegungsmöglichkeiten des Verschlussmittel-Einsatzes 5, als eine Dreh- oder Verschiebebewegung oder eine Kombination aus beiden.

In den Figuren 3 und 4 ist zusätzlich zur bereits beschriebenen Figur 2 das Antriebsmittel 3, welches im Verschlussmittel-Einsatz 5 angeordnet ist, dargestellt. Darüber hinaus ist ein mit dem Verschlussmittel-Einsatz 5 verbundenes Arretierungsmittel 4 dargestellt. Die Figur 3 zeigt ein Arretierungsmittel 4, welches mittels einer Drehbewegung einen nicht dargestellten Stahlbügel 7, wie aus der Figur 1 bekannt, arretieren und freigeben kann. Die Figur 4 zeigt ein anderes Arretierungsmittel 4, welches durch eine Verschiebung des Verschlussmittel-Einsatzes 5 entlang der Achse 6 verschoben wird. Derart bewegt sich das Arretierungsmittel 4 wie ein Riegel aus dem Verschlussmittel-Gehäuse heraus, um eine Arretierung zu ermöglichen oder in dieses hinein um die Arretierung aufzuheben. In dieser Ausführung ist ein entsprechendes Gegenstück für das Arretierungsmittel 4 vorgesehen, welches in den Figuren nicht dargestellt ist.

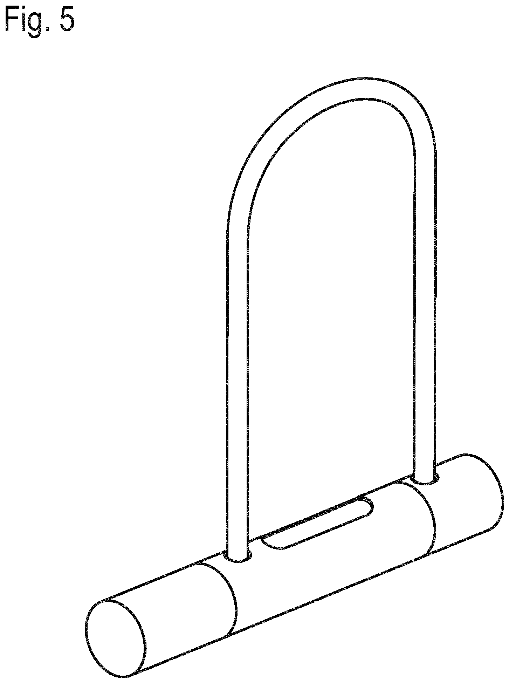

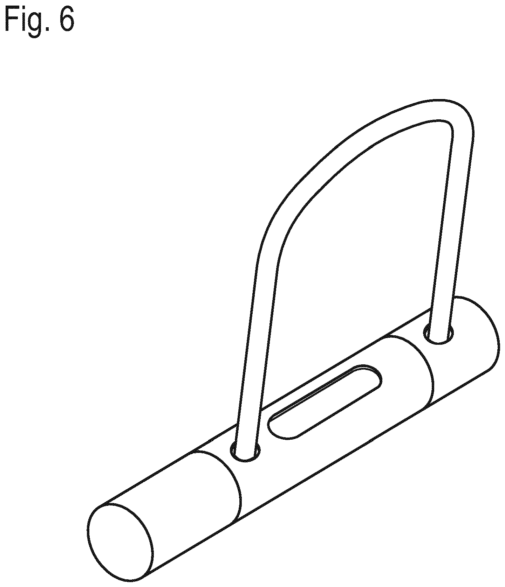

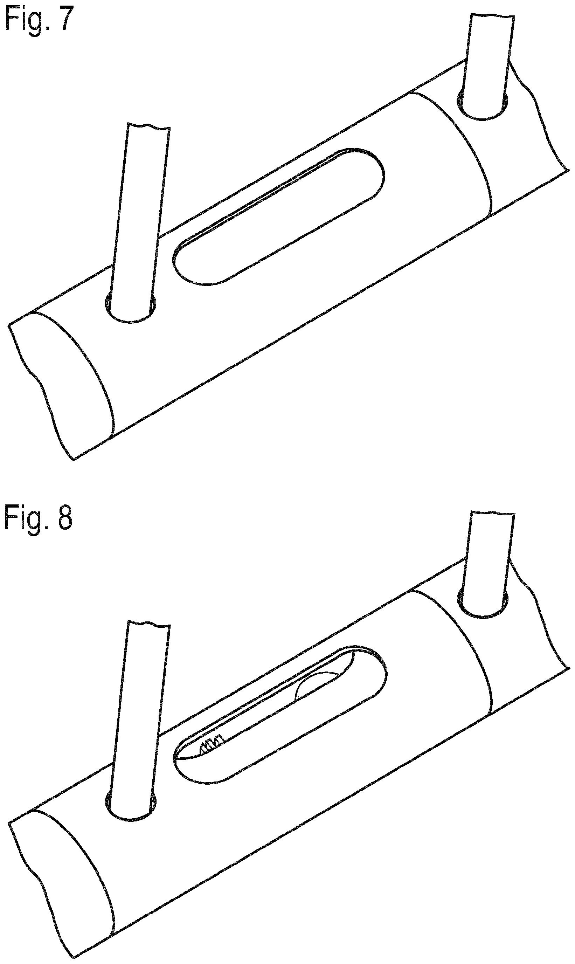

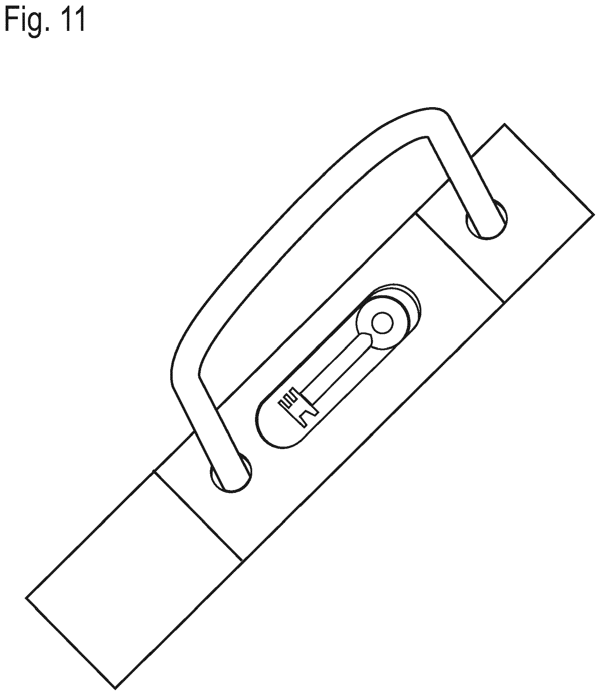

Die Figuren 5 bis 11 zeigen eine spezielle Ausführung des Verschlussmittels zum Einsatz in einem Fahrradbügelschloss.

In diesen Figuren ist auch ein Bereich 8 zum Einlegen eines Gegenstands in das Verschlussmittel 1 dargestellt. Als Gegenstand 9 ist hier, nur als Beispiel zu verstehen, ein Schlüssel dargestellt. Derart kann neben dem Anschließen eines Motorrads oder eines Motorrollers mittels des dargestellten Bügelschlosses auch der zugehörige zum Starten benötigte Schlüssel sicher verwahrt werden.

Ein derartiges Verschlussmittel enthält auch die zur drahtlosen Ansteuerung notwendigen und aus dem Stand der Technik bekannten Baugruppen Batterie 10, Antenne 12 sowie die Steuerschaltung 11 und ermöglicht derart einen Verriegelungs- oder Entriegelungsvorgang mittels eines Tablett-PC oder einem Smartphone, beispielsweise unter Nutzung einer Bluetooth Datenübertragung zu steuern.

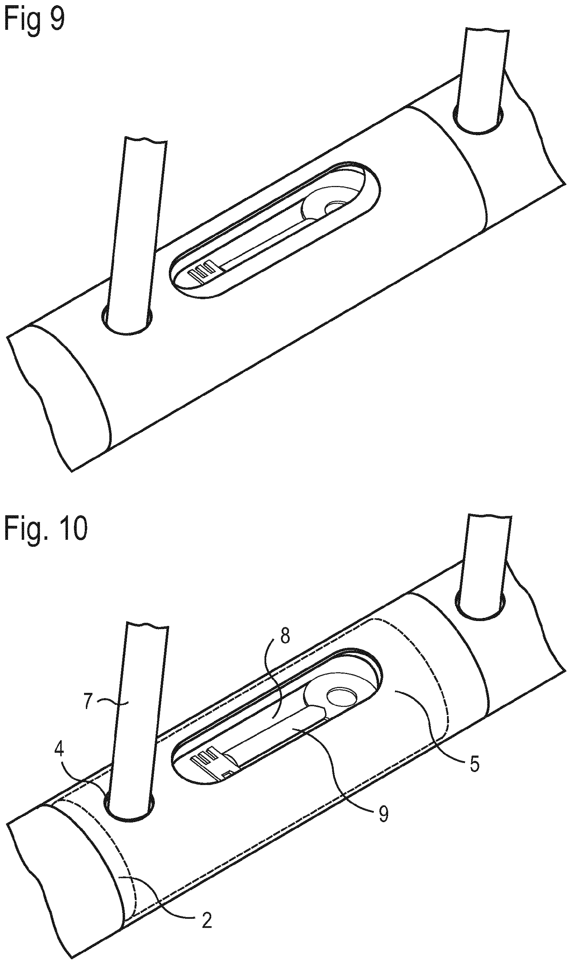

Ein Beispiel für eine Ausrichtung in einer ersten Position, gemäß Anspruch 4, ist in der Figur 10 dargestellt. Ein Beispiel für die zweite Position ist in den Figuren 5, 6 und 7 dargestellt.

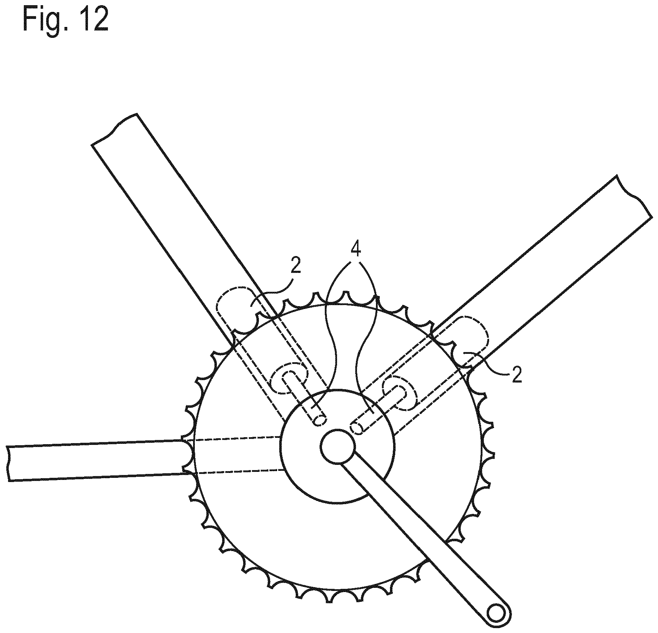

Eine andere Anwendung des erfindungsgemäßen Verschlussmittels besteht in einer Anordnung in einem Fahrradrahmen im Bereich des Tretlagers. Vorgesehen ist, das Arretierungsmittel 4 durch eine Verschiebebewegung des Verschlussmittel-Einsatzes 5 derart in die Richtung der Achse des Tretlagers zu verschieben, dass die Achse durch das riegelförmige Arretierungsmittel 3 an einer Drehbewegung gehindert wird. Dieses Prinzip kann auf beliebige Achsen oder Zahnräder und ähnliche Teile angewandt werden und derart eine Drehbewegung blockieren. In der Figur 12 ist eine derartige Einbringung des Verschlussmittels an verschiedenen Positionen innerhalb eines Fahrradrahmenrohres dargestellt. Die Prinzipskizze zeigt nur einen Ausschnitt des Fahrradrahmens im Bereich des Tretlagers. Dargestellt ist das Verschlussmittel-Gehäuse 2 mit dem Arretierungsmittel 4 an zwei verschiedenen Positionen im Rahmenrohr.

Neben dieser Anwendung für Fahrräder oder E-Bikes kann das Verschlussmittel natürlich auch für alle anderen Arten von Fahrzeugen wie Motorräder, Motorroller oder Automobile eingesetzt werden und durch ein Blockieren beweglicher Bauteile eine Fahrzeugnutzung verhindern.

Eine weitere denkbare Anwendung des digitalen Verschlussmittels ist die eines beispielsweise vor einer Wohnung, einem Hotelzimmer oder Haus angebrachten Schlüsselsafes. Eine zum Zutritt berechtigte Person erhält einen elektronischen Zutrittscode auf sein Smartphone oder Tablett-PC übermittelt. Dies kann nach Buchung des Hotelzimmers oder der Ferienwohnung erfolgen. In unmittelbarer Nähe zum Schlüsselsafe kann das Smartphone über eine Bluetooth Verbindung den erhaltenen Zutrittscode senden und der Safe öffnet sich. Der Schlüssel kann entnommen werden und steht dem Nutzer/Mieter zur Verfügung. Derart kann ein Zutritt zu Objekten rund um die Uhr gewährleistet werden ohne dass hierfür Personalkosten entstehen.

Nachfolgend sind einige Einsatzmöglichkeiten für das erfindungsgemäße digitale Schließsystem aufgelistet:
- als ein mobiler Zylinder,
- als ein Zylinder, welcher innerhalb einer Tür oder eines Türrahmens montiert ist,
- als Zylinder, welcher an einer Wand verschraubt, einer Tür, einem Zaun, einem Behälter oder ähnlichem montiert ist,
- als ein in ein Mauerwerk eingemauerter Zylinder,
- als ein Zylinder, welcher Teil eines Fahrradschlosses ist,
- als ein Zylinder, welcher ein Bestandteil eines Vorhängeschlosses ist,
- als ein Türknauf oder ein Tütbeschlag
- Als Knauf an einer Wand, einer Tür, einem Zaun, einem Container, etc. befestigt oder verschraubt
- als in ein Mauerwerk eingemauerter Knauf
- als Bestandteil eines Tankdeckels für Kraftfahrzeuge, oder ähnlichen zylinderförmigen Verschlüssen, beispielsweise für Fässer,
- als ein mobiler Rohrsafe ohne feste Montage, beispielsweise zur Aufbewahrung von Schlüsseln, Geld, Dokumenten und anderen Wertgegenständen,
- als ein fest montierter Rohrsafe, beispielsweise an einer Wand, einer Tür, einem Zaun, einem Behälter oder ähnlichem,
- als ein Rohrsafe, welcher in eine Mauer eingemauert ist.

Dabei kann das digitale Verschlussmittel 1 verschiedenartig geöffnet werden. Ein Öffnen kann beispielsweise mittels einer Rechts- oder Linksdrehung erfolgen. Alternativ kann auch eine spiralförmige Drehung nach rechts oder links zum Öffnen des digitalen Verschlussmittels 1 führen. Eine weitere Möglichkeit besteht in einer seitlichen Bewegung in Verbindung mit einer aufwärts oder abwärts gerichteten Bewegung.

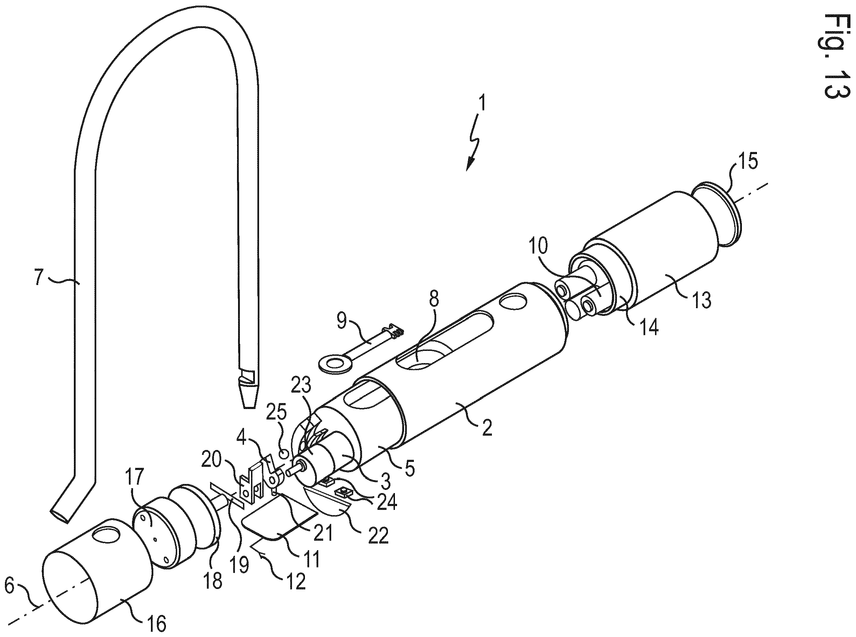

In der Figur 13 ist eine Ausführung des digitalen Verschlussmittels 1 als ein Fahrradbügelschloss in einer detaillierteren Darstellung der einzelnen Bauteile und Baugruppen dargestellt.

Gezeigt ist ein Batteriefach 13, in welches eine die Batterien 10 aufnehmende Batteriehalterung 14, eingeschoben wird. Das Batteriefach 13 ist mit dem Verschlussmittel-Gehäuse 2, beispielsweise durch ein Schraubgewinde, verbindbar. Zum Schließen des Batteriefachs 13 wird ein Batterieverschlussdeckel 15 angebracht.

Dargestellt ist weiterhin der Verschlussmittel-Einsatz 5, welcher in das Verschlussmittel-Gehäuse 2 eingeschoben wird und in diesem drehbar gelagert ist. Dieser Verschlussmittel-Einsatz 5, weist einen Bereich 8 zum Einlegen eines Gegenstandes auf, in welchem, beispielsweise der dargestellte Schlüssel 9, einlegbar ist. Zum Verdrehen des Verschlussmittel-Einsatzes 5 im Verschlussmittel-Gehäuse 2 ist eine Antriebsmittel 3, beispielsweise ein Motor, dargestellt, welcher mit einem Getriebe 23 verbunden ist.

Dieser Motor 3 ist in verschiedene Drehrichtungen ansteuerbar, womit gewährleistet wird, dass der Verschlussmittel-Einsatz 5 in verschiedene Richtungen innerhalb des Verschlussmittel-Gehäuses 2 gedreht werden kann. Ein Abschalten des Motors 3 in einer erreichten Endposition wird durch die Endschalterplatine 22 sowie die zugehörigen Miniaturtaster 24 gewährleistet. Zum Arretieren des Verschlussmittels 1 in einer erreichten Endposition, beispielsweise um Manipulationen vorzubeugen, ist eine Kugel 25 vorgesehen, welcher mittels eines Arretierungsmittels 4 in eine vorgesehene Vertiefung gedrückt wird und somit ein Verdrehen des Mechanismus verhindert wird.

Durch das Arretierungsmittel 4 wird ebenfalls der Stahlbügel des Fahrradschlosses 7 in der Schließposition arretiert. Zur Kommunikation mit einem Sender bzw. Empfänger, welcher das digitale Verschlussmittel steuert, ist eine Steuereinheit 11, auf einer Platine vorgesehen, an welche die Antenne 12 angeschlossen ist. Diese Steuereinheit 11 ist mit der Spannungsversorgung 10 und dem Elektromotor 3 verbunden. Werden von der Steuereinheit 11 entsprechende Befehle, beispielsweise zum Öffnen oder Schließen des digitalen Verschlussmittels 1 detektiert, erzeugt die Steuereinheit 11 elektrische Ansteuersignale für den Motor 3.

Gezeigt ist außerdem, dass am Arretierungsmittel 4 ein Hebel 20 angebracht ist, mittels welchem, die Minitaturtaster 24 betätigt werden. Zu den Baugruppen des digitalen Verschlussmittels 1 gehören weiterhin eine Plattfeder 19, ein Aufsatz 18, eine Verschlussmittelschraube 17 und eine Verschlussmittelkappe 16.

Die Verschlussmittelkappe 16 weist eine Öffnung auf, in die das Ende des Stahlbügels 7 eingebracht wird, bevor das zweite Ende in eine weitere Öffnung, dargestellt im Verschlussmittel-Gehäuse 2, eingebracht und arretiert werden kann. Das digitale Verschlussmittel 1 kann außerdem über ein nichtdargestelltes Anzeigemittel verfügen, über welches beispielsweise der Zustand des Verschlussmittels 1, wie geöffnet oder geschlossen sowie der Ladezustand der Batterien, signalisiert werden kann. Über ein derartiges Anzeigemittel kann ebenfalls der Zustand einer Datenverbindung mit einem das digitale Verschlussmittel 1 steuernden Steuermittel, wie beispielsweise einem Smartphone oder einem Tablet, signalisiert werden.

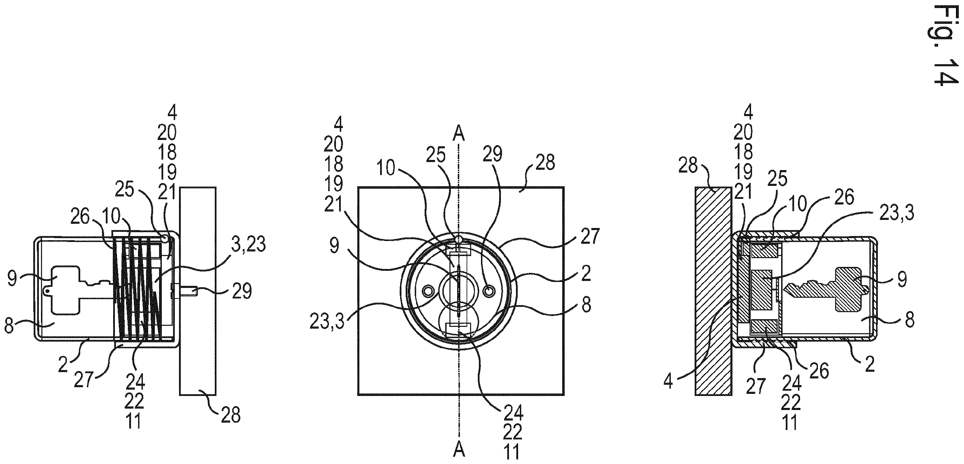

Die Figur 14 zeigt eine Ausführung des digitalen Verschlussmittels 1 als Türknauf oder Wandsafe in verschiedenen Ansichten. Dargestellt ist im linken Teil der Figur 14 eine Seitenansicht und im mittleren Teil eine Vorderansicht des digitalen Verschlussmittels 1. Der rechte Teil der Figur 14 zeigt eine Schnittdarstellung des digitalen Verschlussmittels 1 entlang einer im mittleren Teil dargestellten Schnittlinie, welche mit dem Großbuchstaben A gekennzeichnet ist.

In dieser Ausführung ist ein Installationsgehäuse 27 mittels eines geeigneten Befestigungsmittels 29 an einer Wand oder einem Gegenstand 28 befestigt. Das Installationsgehäuse 27 weist ein Gewinde 26 auf, in welches das Verschlussmittel-Gehäuse 2 einschraubbar ist. Im Verschlussmittel-Gehäuse 2 ist der Bereich zum Einlegen eines Gegenstandes 8 dargestellt, in welchem ein Schlüssel 9 eingelegt ist. Das Verschlussmittel-Gehäuse 2 wird mittels des dargestellten Antriebsmittels 3, welches mit einem Getriebe 23 gekoppelt ist, in das Installationsgehäuse 27 ein- bzw. ausgeschraubt. Dargestellt ist auch die Spannungsversorgung 10 sowie die Kugel 25, mithilfe derer das digitale Verschlussmittel 1 beim Erreichen der Schlussposition arretiert werden kann. Im unteren Bereich des Verschlussmittels 1 sind die Minitaturtaster 24, die Endschalterplatine 22 sowie Steuereinheit 11 zur Steuerung des digitalen Verschlussmittels 1 dargestellt. Im oberen Bereich ist die Stiftschraube 21, die Plattfeder 19, der Aufsatz 18, der Hebel 20 sowie das Arretierungsmittel 4 dargestellt. Die mittlere Darstellung der Figur 14 zeigt diese eben beschriebenen Baugruppen in einer Darstellung einer anderen Perspektive zum besseren Verständnis. Darüber hinaus enthält die mittlere Darstellung eine Schnittlinie, welche mit dem Großbuchstaben A gekennzeichnet ist, an der die Figur geschnitten wurde. Die Schnittdarstellung selbst ist im rechten Teil der Figur 14 gezeigt.

Die Schnittdarstellung zeigt das Arretierungsmittel 4, welches die Kugel 25 beim Erreichen der Schließposition des digitalen Verschlussmittels 1 in eine Aussparung des Installationsgehäuses 27 einpresst und derart, dass das Verschlussmittel 1 arretiert. Mittels dieser Arretierung wird ein Herausdrehen des Verschlussmittel-Gehäuses 2 aus dem Installationsgehäuse 27 durch Unberechtigte verhindert. In der Darstellung der Figur 14 ist ein Schlüssel 9 im Bereich zum Einlegen eines Gegenstandes 8 dargestellt. Die Erfindung ist aber nicht auf das Einlegen eines Schlüssels beschränkt. Einlegbar sind alle denkbaren Gegenstände, welche im Bereich 8 Platz finden.

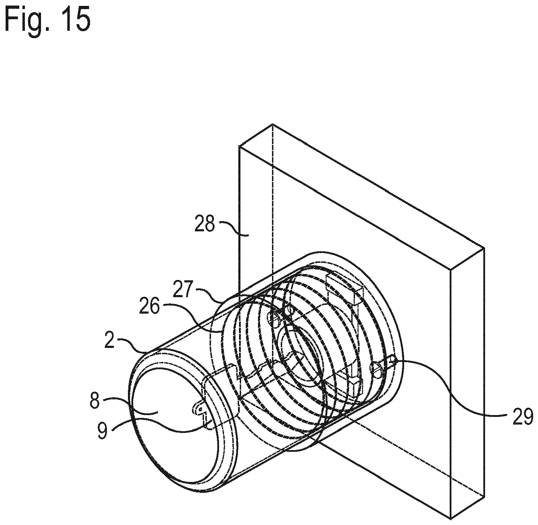

Die Figur 15 zeigt eine perspektivische Darstellung des digitalen Verschlussmittels 1 in der Ausführung als Türknauf oder Wandsafe aus der Figur 14. Dargestellt ist die Wand 28, an welcher das Installationsgehäuse 27, mittels eines oder mehrerer Befestigungsmittel 29 befestigt wird. Weiterhin dargestellt ist das Verschlussmittel-Gehäuse 2 sowie das Gewinde 26. Im Bereich zum Einlegen eines Gegenstandes 8 ist wiederrum ein Schlüssel 9 beispielhaft dargestellt.

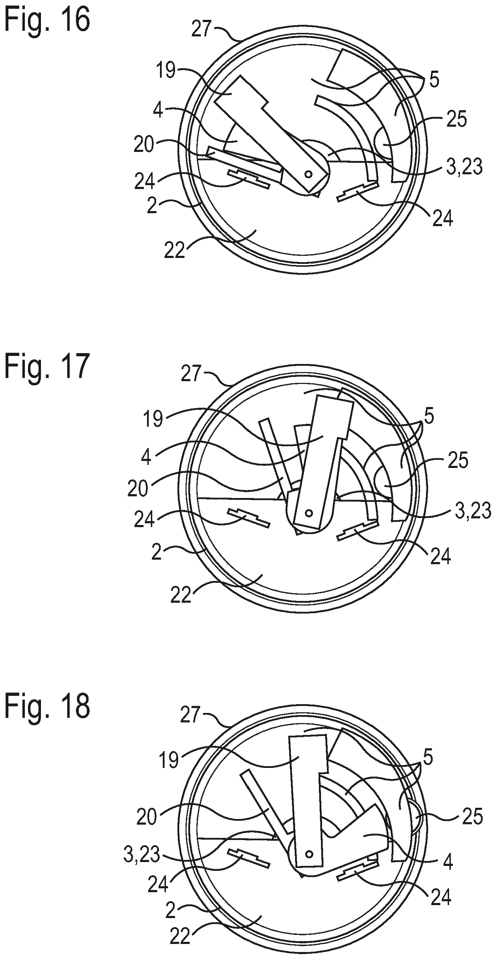

Die Figur 16 zeigt eine Teildarstellung eines Antimanipulationsmechanismus des digitalen Verschlussmittels 1, dargestellt in einer Position mit geöffneter Sperre. In dieser Position kann das Verschlussmittel 1 geöffnet und ein Gegenstand 9 aus dem Bereich 8 zum Einlegen eines Gegenstandes entnommen oder in diesen eingebracht werden.

In dieser Position betätigt der Hebel 20 einen der auf der Endschalterplatine 22 angeordneten Miniaturtaster 24, welcher die Öffnungsposition des digitalen Verschlussmittels 1 detektiert.

Das im Installationsgehäuse 27 eingebrachte Verschlussmittel-Gehäuse 2 kann, beispielsweise durch ein einfaches Herausziehen oder ein Herausschrauben mittels eines nicht dargestellten Gewindes 26, entnommen werden, wodurch der im Bereich 8 eingelegte Gegenstand 9 frei zugänglich wird. Alternativ kann auch ein Gegenstand 9 in den Bereich 8 eingebracht werden.

Das Arretierungsmittel 4 sowie die Blattfeder 19 befinden sich in einer von der Kugel 25 entfernten Position, in der Darstellung der Figur 16 im linken Bereich des Verschlussmittels 1. Ein Antrieb der Mechanik innerhalb des Verschlussmittels 1 erfolgt durch den mit einem Getriebe 23 gekoppelten Motor 3.

Die Bezugsziffer 5 zeigt den Verschlussmittel-Einsatz mit funktionsbedingten Ausfräsungen, wie sie auch der Figur 13 entnommen werden können.

Die Figur 17 zeigt eine weitere Teildarstellung des Antimanipulationsmechanismus des digitalen Verschlussmittels 1, dargestellt in einer Übergangsposition vom Zustand "Sperre geöffnet" zu einem Zustand "Sperre geschlossen" oder umgekehrt.

Die Figur 17 zeigt die bereits zur Figur 16 beschriebenen Elemente, wobei sich die Positionen des Arretierungsmittels 4, des Hebels 20 und der Blattfeder 19 in Richtung einer Schließposition in der Nähe der Kugel 25 verändern. Der Antrieb der beweglichen Teile des digitalen Verschlussmittels 1 erfolgt durch den Motor 3 sowie das Getriebe 23.

Somit kann das mit dem Getriebe 23 verbundene Arretierungsmittels 4 die Blattfeder 19 im Urzeigersinn bewegen. Der Miniaturtaster 24, welcher die Öffnungsposition des digitalen Verschlussmittels 1 detektiert, ist freigegeben, also nicht mehr durch den Hebel 20 betätigt.

Der Verschlussmittel-Einsatz 5 verändert seine Lage innerhalb des Verschlussmittel-Gehäuses 2 in einer Drehbewegung um die nicht dargestellte Längsachse 6, wodurch der Bereich zum Einlegen eines Gegenstandes 8 geschlossen wird. Durch dieses Verschließen des Bereichs 8 kann dieser nicht mehr entnommen werden.

Die Figur 18 zeigt eine dritte Teildarstellung des Antimanipulationsmechanismus des digitalen Verschlussmittels 1, in einer Position, in welcher die Sperre geschlossen ist, also der Antimanipulationsmechanismus verriegelt ist.

Dargestellt ist, dass sich das Arretierungsmittel 4 und die Blattfeder 19 weiter im Urzeigersinn bewegt haben. Das Arretierungsmittel 4 hat nun eine Position erreicht, in welcher es die Kugel 25 in eine hierfür vorgesehene Vertiefung im Installationsgehäuse 27 einpresst und derart ein Verdrehen des Verschlussmittel-Einsatzes 5 innerhalb des Installationsgehäuses 27 verhindert.

Bei einem Einsatz des Antimanipulationsmechanismus in einer Ausführung als Fahrradschloss, wie in der Figur 13 dargestellt, würde das Einpressen der Kugel 25 in die hierfür vorgesehene Vertiefung in das Verschlussmittel-Gehäuse 2 erfolgen. Derart würde sodann ein Verdrehen des Verschlussmitteleinsatzes 5 innerhalb des Verschlussmittel-Gehäuses 2 verhindert werden.

Während des Schließvorganges überspringt das Arretierungsmittel 4 die Position der Blattfeder 19 und bewegt sich weiter bis zum Erreichen der Position "Sperre geschlossen". Das Erreichen dieser Endposition wird durch den in der Figur 18 rechts dargestellten Miniaturtaster 24 detektiert, welcher durch das Arretierungsmittel 4 betätigt wird.

Ein Herausnehmen oder Einlegen eines Gegenstands 9 in den Bereich 8 wird in dieser Position des digitalen Verschlussmittels 1 verhindert. Durch den Einsatz des Antimanipulationsmechanismus werden mechanische Öffnungsversuche des Verschlussmittels 1 verhindert.

Das Öffnen des Antimanipulationsmechanismus sowie des Verschlussmittels 1 erfolgt in der umgekehrten Reihenfolge. Das Arretierungsmittel 4 wird angetrieben durch Motor 3 und Getriebe 23 entgegen des Urzeigersinns bewegt und bewegt auch die Blattfeder 19 in diese Richtung. Durch diese Bewegung des Arretierungsmittels 4 wird die Kugel 25 freigegeben und die Arretierung gelöst. Während der Bewegung des Arretierungsmittels 4 in Richtung der Öffnungsposition wird die Blattfeder 19 wiederum übersprungen. Der Öffnungsvorgang wird beendet, wenn der in der Figur 18 links dargestellte Mikrotaster 24 betätigt wird und über die Steuereinheit 11 der Motor 3 abgeschaltet wird.

Ist diese Position erreicht, ist der Bereich 8 frei zugängig und ein Gegenstand 9 kann entnommen oder eingebracht werden.

### Bezugszeichenliste

- 1: Verschlussmittel
- 2: Verschlussmittel-Gehäuse
- 3: Antriebsmittel
- 4: Arretierungsmittel
- 5: Verschlussmittel-Einsatz
- 6: Längsachse
- 7: Stahlbügel eines Fahrradschlosses
- 8: Bereich zum Einlegen eines Gegenstands
- 9: Gegenstand (Schlüssel)
- 10: Spannungsversorgung (Batterie)
- 11: Steuereinheit
- 12: Antenne
- 13: Batteriefach
- 14: Batteriehalterung
- 15: Batterieverschlussdeckel
- 16: Verschlussmittelkappe
- 17: Verschlussschraube
- 18: Aufsatz
- 19: Blattfeder
- 20: Hebel
- 21: Stiftschraube
- 22: Endschalterplatine
- 23: Getriebe
- 24: Miniaturtaster
- 25: Kugel
- 26: Gewinde
- 27: Installationsgehäuse
- 28: Wand/Gegenstand
- 29: Befestigungsmittel

## Patentansprüche

1. Digitales Verschlussmittel, bestehend aus einem Verschlussmittel-Gehäuse (2), in welchem ein Antriebsmittel (3) mit einem Arretierungsmittel (4) zumindest mittelbar verbunden angeordnet ist, **dadurch gekennzeichnet, dass** das Antriebsmittel (3) in einem Verschlussmittel-Einsatz (5) angeordnet ist, dass der Verschlussmittel-Einsatz (5) in dem und relativ zu dem Verschlussmittel-Gehäuse (2) bewegbar angeordnet ist und dass das Arretierungsmittel (4) mit dem Verschlussmittel-Einsatz (5) verbunden ist.

2. Digitales Verschlussmittel nach Anspruch 1, **dadurch gekennzeichnet, dass** der Verschlussmittel-Einsatz (5) im Verschlussmittel-Gehäuse (2) drehbar um eine Längsachse (6) und/oder verschiebbar entlang einer Längsachse (6) angeordnet ist.

3. Digitales Verschlussmittel nach Anspruch 1 oder 2, **dadurch gekennzeichnet, dass** der Verschlussmittel-Einsatz (5) einen Bereich (8) zum Einlegen eines Gegenstands (9) aufweist und dass das Verschlussmittel-Gehäuse (2) eine Öffnung, korrespondierend mit dem Bereich zum Einlegen eines Gegenstands aufweist.

4. Digitales Verschlussmittel nach einem der Ansprüche 1 bis 3, **dadurch gekennzeichnet, dass** der Verschlussmittel-Einsatz (5) in eine erste Position bewegbar ist in welcher der Bereich (8) mit der Öffnung des Verschlussmittel-Gehäuse (2) derart zueinander ausgerichtet sind, dass ein Einlegen oder Entnehmen eines Gegenstands (9) in oder aus dem Bereich (8) gewährleistet ist und dass der Verschlussmittel-Einsatz (5) in eine zweite Position bewegbar ist, in welcher ein Einlegen oder Entnehmen eines Gegenstands (9) in oder aus dem Bereich (8) verhindert wird.

5. Digitales Verschlussmittel nach einem der Ansprüche 1 bis 4, **dadurch gekennzeichnet, dass** der Verschlussmittel-Einsatz (5) oder das Verschlussmittel-Gehäuse (2) mindestens in der zweiten Position gegen eine ungewolltes Verschieben und/oder Verdrehen des Verschlussmittel-Einsatzes (5) mittels eines Bolzens oder einer Kugel (25) feststellbar ist.

6. Digitales Verschlussmittel nach einem der Ansprüche 1 bis 5, **dadurch gekennzeichnet, dass** im Verschlussmittel-Gehäuse (2) eine Antenne, eine Spannungsversorgungseinheit und eine elektronische Steueranordnung angeordnet sind.

7. Digitales Verschlussmittel nach einem der Ansprüche 1 bis 6, **dadurch gekennzeichnet, dass** zum Feststellen in der zweiten Position ein Arretierungsmittel (4), ein Hebel (20), ein Aufsatz (18), eine Blattfeder (19), eine Stiftschraube (21) sowie die Kugel (25) angeordnet sind, welche zumindest indirekt verbunden sind mit dem Antriebsmittel (3) und einem Getriebe (23).

## Claims

1. Digital closure means consisting of a closure-means housing (2) in which a drive means (3) having a locking means (4) is arranged in an at least indirectly connected manner, **characterized in that** the drive means (3) is arranged in a closure-means insert (5), **in that** the closure-means insert (5) is arranged in the closure-means housing (2) and so as to be movable relative to the latter, and **in that** the locking means (4) is connected to the closure-means insert (5).

2. Digital closure means according to Claim 1, **characterized in that** the closure-means insert (5) is arranged in the closure-means housing (2) so as to be rotatable about a longitudinal axis (6) and/or so as to be displaceable along a longitudinal axis (6).

3. Digital closure means according to Claim 1 or 2, **characterized in that** the closure-means insert (5) has a region (8) for introducing an article (9), and **in that** the closure-means housing (2) has an opening, corresponding to the region for introducing an article.

4. Digital closure means according to one of Claims 1 to 3, **characterized in that** the closure-means insert (5) is movable into a first position, in which the region (8) and the opening of the closure-means housing (2) are aligned with one another such that introduction or removal of an article (9) into or from the region (8) is ensured, and **in that** the closure-means insert (5) is movable into a second position, in which introduction or removal of an article (9) into or from the region (8) is prevented.

5. Digital closure means according to one of Claims 1 to 4, **characterized in that** the closure-means insert (5) or the closure-means housing (2) is fixable against undesired displacement and/or rotation of the closure-means insert (5), at least in the second position, by means of a pin or a ball (25).

6. Digital closure means according to one of Claims 1 to 5, **characterized in that** an antenna, a power supply unit and an electronic control arrangement are arranged in the closure-means housing (2).

7. Digital closure means according to one of Claims 1 to 6, **characterized in that**, for fixing in the second position, a locking means (4), a lever (20), an attachment (18), a leaf spring (19), a stud screw (21) and the ball (25) are arranged, which are connected at least indirectly to the drive means (3) and a transmission (23).

## Revendications

1. Moyen de fermeture numérique, constitué d'un boîtier de moyen de fermeture (2), dans lequel est disposé un moyen d'entraînement (3) au moins indirectement relié à un moyen de blocage (4), **caractérisé en ce que** le moyen d'entraînement (3) est disposé dans un insert de moyen de fermeture (5), **en ce que** l'insert de moyen de fermeture (5) est disposé dans le boîtier de moyen de fermeture (2) et de manière mobile par rapport à celui-ci, et **en ce que** le moyen de blocage (4) est relié à l'insert de moyen de fermeture (5).

2. Moyen de fermeture numérique selon la revendication 1, **caractérisé en ce que** l'insert de moyen de fermeture (5) est disposé dans le boîtier du moyen de fermeture (2) de manière à ce qu'il puisse tourner autour d'un axe longitudinal (6) et/ou coulisser le long d'un axe longitudinal (6).

3. Moyen de fermeture numérique selon la revendication 1 ou 2, **caractérisé en ce que** l'insert de moyen de fermeture (5) comporte une région (8) destinée à l'introduction d'un objet (9) et **en ce que** le boîtier de moyen de fermeture (2) comporte une ouverture correspondant à la région destinée à l'introduction d'un objet.

4. Moyen de fermeture numérique selon l'une quelconque des revendications 1 à 3, **caractérisé en ce que** l'insert de moyen de fermeture (5) peut être déplacé à une première position à laquelle la région (8) est orientée par rapport à l'ouverture du boîtier de moyen de fermeture (2) de manière à ce que l'introduction ou le retrait d'un objet (9) dans ou hors de la région (8) soit garanti et **en ce que** l'insert de moyen de fermeture (5) peut être déplacé à une seconde position à laquelle l'introduction ou le retrait d'un objet (9) dans ou hors de la région (8) est empêché.

5. Moyen de fermeture numérique selon l'une quelconque des revendications 1 à 4, **caractérisé en ce que** l'insert de moyen de fermeture (5) ou le boîtier de moyen de fermeture (2) peut être fixé au moins à la seconde position pour empêcher le glissement et/ou la rotation indésirable de l'insert de moyen de fermeture (5) au moyen d'un boulon ou d'une bille (25).

6. Moyen de fermeture numérique selon l'une quelconque des revendications 1 à 5, **caractérisé en ce qu'**une antenne, une unité d'alimentation en tension et un dispositif de commande électronique sont disposés dans le boîtier de moyen de fermeture (2).

7. Moyen de fermeture numérique selon l'une quelconque des revendications 1 à 6, **caractérisé en ce qu'**il est prévu pour la fixation à la seconde position un moyen de blocage (4), un levier (20), un élément de fixation (18), un ressort à lames (19), une vis à goujon (21) et la bille (25), qui sont au moins indirectement reliés au moyen d'entraînement (3) et à un engrenage (23) .
